# EUROPÄISCHE PATENTSCHRIFT

(11) **EP 4 463 343 B1**
(45) Veröffentlichungstag und Bekanntmachung des Hinweises auf die Patenterteilung: **24.09.2025**
(21) Anmeldenummer: 23702744.6
(22) Anmeldetag: 09.01.2023
(51) Int. Cl.: B60T 13/66, B60T 17/22

(54) **HYDRAULISCHE BREMSANLAGE FÜR NIEDRIGE TEMPERATUREN UND VERFAHREN ZUM BETRIEB EINER SOLCHEN BREMSANLAGE**
HYDRAULIC BRAKE SYSTEM FOR LOW TEMPERATURES AND METHOD FOR OPERATING SUCH A BRAKE SYSTEM
SYSTÈME DE FREINAGE HYDRAULIQUE POUR BASSES TEMPÉRATURES ET PROCÉDÉ POUR FAIRE FONCTIONNER UN TEL SYSTÈME DE FREINAGE

(30) Priorität: 13.01.2022 DE 102022200332; 25.04.2022 DE 102022203990
(43) Veröffentlichungstag der Anmeldung: 20.11.2024
(73) Patentinhaber: Continental Automotive Technologies GmbH, 30175 Hannover (DE)
(72) Erfinder: NEU, Andreas, 30175 Hannover (DE); HITZEL, Michael, 30175 Hannover (DE); COURTH, Christian, 30175 Hannover (DE); BILLER, Harald, 30175 Hannover (DE); MIHM, Sebastian, 30175 Hannover (DE)
(74) Vertreter: Aumovio Corporation
(86) Internationale Anmeldenummer: PCT/DE2023/200006
(87) Internationale Veröffentlichungsnummer: WO 2023/134830

(56) Entgegenhaltungen:
- WO-A1-02/066306
- DE-A1- 10 059 348
- US-B1- 6 901 789

## Beschreibung

Die Erfindung betrifft eine hydraulische Bremsanlage aufweisend eine hydraulische Pumpe zum Fördern von Bremsflüssigkeit von einer Saugseite zu einer Druckseite, zumindest ein elektrisch gesteuertes hydraulisches Ventil, und ein Bremsflüssigkeitsreservoir, welches mit der Saugseite der Pumpe verbunden ist, sowie zumindest ein Steuergerät zur Regelung der hydraulischen Pumpe und des zumindest einen hydraulischen Ventils.

Moderne redundante Bremssysteme weisen typischerweise zwei unabhängige elektrische Druckbereitstellungseinrichtungen auf, welche meist auch von verschiedenen Steuereinheiten angesteuert werden. Somit kann auch bei Ausfall einer der Druckbereitstellungseinrichtungen eine Mindestverzögerung gewährleistet werden.

Aus der WO 2017/144201 A1 ist eine solche Bremsanlage bekannt, mit einer brake-by-wire-Bremsanlage zur Umsetzung von Normalbremsungen und einem Zusatzmodul als Backup-Bremssystem. In diesem Zusatzmodul ist ein Bremsflüssigkeitsreservoir verbaut, um dieses sicher mit Bremsflüssigkeit zu versorgen.

Problematisch ist dabei, die Bereitstellung der Bremsleistung bei extrem niedrigen Temperaturen. Das Problem hier besteht in der exponentiell ansteigenden Viskosität der Bremsflüssigkeit. Diese erhöhte Viskosität beeinträchtigt den Volumenstrom zur Saugseite der Pumpe in den Bauteilen.

Die DE 100 59 348 A1 offenbart eine Bremsanlage, in der elektrisch gesteuerte Hydraulikventile mit Spulen zwecks einer elektrischen Beheizung der diese Spulen aufnehmenden Träger angesteuert werden.

Weiter ist aus der WO 02/066306 A1 ein ebensolches Verfahren bekannt bei dem elektrisch gesteuerte Hydraulikventile mit Spulen zwecks einer elektrischen Beheizung der diese Spulen aufnehmenden Träger angesteuert werden, bei dem eine erste Heizphase durchgeführt wird gefolgt von einer Heizpause und zumindest einem weiteren Heizimpuls.

Es ist daher Aufgabe der vorliegenden Erfindung, eine Bremsanlage bereitzustellen, welche die Fahrzeugverzögerung auch bei Niedrigtemperaturen gewährleistet.

Die Aufgabe wird dadurch gelöst, dass das Steuergerät dazu eingerichtet ist, bei Unterschreiten einer Grenztemperatur, das Bremsflüssigkeitsreservoir mittels des zumindest einen elektrisch gesteuerten hydraulischen Ventils zu beheizen, indem dieses mit einem elektrischen Strom angesteuert wird. Alternativ zur Temperatur wird direkt die Viskosität der Bremsflüssigkeit betrachtet, welche das für den Druckaufbau entscheidende Medium ist. Überschreitet diese eine Grenzviskosität so wird das Reservoir und damit die Bremsflüssigkeit darin beheizt. Dies ermöglicht auch bei Tieftemperatur einen ausreichend schnellen Druckaufbau.

Erfindungsgemäß ist die hydraulische Pumpe als Kolbenpumpe ausgebildet und weiter ist ein Linearaktuator vorgesehen, wobei das Steuergerät dazu eingerichtet ist, im fehlerfreien Fall den Linearaktuator zum Druckaufbau anzusteuern und bei einem Fehler in dem Linearaktuator die Kolbenpumpe zum Druckaufbau anzusteuern. Die hydraulische Bremsanlage weist somit eine hohe Redundanz auf und kann somit ohne fahrerabhängige hydraulische Rückfallebene auskommen. Dies ist für autonomes Fahren oder die Ausführung der Bremsanlage mit einem sogenannten ePedal nötig.

In einer bevorzugten Ausführungsform der Erfindung ist das Steuergerät mehrteilig ausgeführt, wobei eine erste Steuereinheit den Linearaktuator ansteuert und eine zweite Steuereinheit die Kolbenpumpe ansteuert. Die erste Steuereinheit wird entsprechend auch als Aktuator ECU bezeichnet. Da die zweite Steuereinheit typischerweise neben der Kolbenpumpe auch die Radventile ansteuert wird diese als Modulator ECU bezeichnet. Somit ist auch die Elektronik redundant ausgeführt.

Bevorzugt ist, dass die hydraulische Pumpe auf der Saugseite vergrößerte Bohrungen aufweist, um den Flusswiderstand weiter zu verringern. Bevorzugt können die Bohrungen auf der Saugseite eine Größe von 5mm bis 15mm, bevorzugt 5mm bis 8mm, besonders bevorzugt 6,5mm aufweisen. Die weiteren Bohrungen der Bremsanlage können gleichzeitig kleiner als 5mm, insbesondere 2mm bis 5mm, bevorzugt 3,3 bis 4,46 mm groß ausgeführt sein.

In einer bevorzugten Ausführungsform der Erfindung ist das Bremsflüssigkeitsreservoir gemeinsam mit dem zumindest einen elektrisch gesteuerten hydraulischen Ventil in einem Gehäuseblock verbaut. Somit wird die erzeugte Wärme gut zum Reservoir geleitet. Das Bremsflüssigkeitsreservoir ist bevorzugt einfach als Hohlraum in dem Gehäuseblock ausgebildet. Bevorzugt ist auch die Kolbenpumpe in diesem Gehäuseblock verbaut, sodass der gesamte Weg innerhalb des geheizten Gehäuseblocks liegt.

In einer bevorzugten Ausführungsform der Erfindung ist das Bremsflüssigkeitsreservoir als Leitungsverbindung zwischen zwei hydraulischen Einheiten innerhalb des Gehäuseblocks ausgebildet. Ein solches Reservoir lässt sich besonders einfach und kostengünstig fertigen.

In einer bevorzugten Ausführungsform der Erfindung sind in dem Gehäuseblock mehrere elektrisch gesteuerte hydraulische Ventile verbaut, wobei zum Beheizen alle Ventile bestromt werden und/oder das oder die Ventile, mit dem geringsten Abstand zum Bremsflüssigkeitsreservoir bestromt werden.

In einer bevorzugten Ausführungsform der Erfindung ist das Volumen des Bremsflüssigkeitsreservoir derart mit einer Druck-Volumen-Kennlinie abgestimmt, dass das Volumen rechnerisch eine Verzögerung von 2,44m/s^2 ermöglicht.

In einer bevorzugten Ausführungsform der Erfindung liegt die Grenztemperatur zwischen -20 und -30°C, bevorzugt bei -25°C.

In einer bevorzugten Ausführungsform der Erfindung ist das Steuergerät dazu eingerichtet, die Viskosität zu messen. Dazu wird insbesondere der Linearaktuator angesteuert einen vorgegebenen Volumenstrom durch ein Auslassventil zu fördern. Mittels eines Drucksensors wird die sich einstellende Druckdifferenz gemessen und aus diesen Größen und der Blendengleichung des Auslassventils die Viskosität bestimmt. Auch können für die Größen Kurven oder Tabellen hinterlegt sein, welche eine Bestimmung der Viskosität ermöglichen.

In einer bevorzugten Ausführungsform der Erfindung ist das Steuergerät dazu eingerichtet, die Ventile zu Beginn des Beheizens mit einem maximalen Strom für eine vorgegebene Zeitspanne oder bis zu einer vorbestimmten Temperatur zu bestromen und anschließend mit einem geringeren Haltestrom zu bestromen. Damit wird schnell die benötigte Temperatur erreicht und gleichzeitig ein Überhitzen und somit mögliche Schäden an den Ventilen vermieden.

In einer bevorzugten Ausführungsform der Erfindung ist das Steuergerät dazu eingerichtet, die Ventile zum Beheizen mit einem Strom basierend auf der Abweichung der Temperatur von der Grenztemperatur und/oder der Viskosität von der Grenzviskosität zu bestromen. Somit wird die Heizleistung an die tatsächlichen Begebenheiten angepasst.

In einer bevorzugten Ausführungsform der Erfindung wird die Spulentemperatur während des Beheizens bestimmt. Dazu kann der Widerstand R der Spulen geschätzt werden, indem, z.B. zyklisch alle 10 Sekunden, bei gegebener Spannung U der duty cycle dc der Pulsweitenmodulation (PWM) und der gemessene Strom I ausgewertet wird *R = U* * *dc lI*, und schließlich, aus dem Verhältnis des aktuellen Widerstandes zum bekannten Widerstand bei Raumtemperatur die Spulentemperatur bestimmt wird.

Alternativ wird der Widerstand der Spulen geschätzt, indem man, z.B. zyklisch alle 10 Sekunden, aus mehreren dynamischen Messwerten von Spulenstrom und Spulenspannung mittels kleinstem Quadrate Verfahren die Parameter L und insbesondere R bestimmt. Final wird aus dem Verhältnis des aktuellen Widerstandes zum bekannten Widerstand bei Raumtemperatur die Spulentemperatur bestimmt.

Optional kann der Widerstand durch die gegebene Elektronik gemessen werden. In einer bevorzugten Ausführungsform der Erfindung erfolgt die Beheizung geregelt oder gesteuert. Im geregelten Betrieb, wird ein Temperatursensor, der sich insbesondere im Drucksensor befindet, entsprechend ausgewertet. Somit wird die Heizung mittels des Messwerts der Temperatur auf einen Sollwert der Temperatur geregelt.

Im gesteuerten Betrieb kann bei bekannter Umgebungstemperatur eine vorbestimmte notwendige Heizleistung eingestellt werden. Dies kann insbesondere eingeteilt in Phasen "Aufheizen" und "Temperatur halten" erfolgen, in denen die Heizleistung entsprechend gewählt ist.

Die Aufgabe wird außerdem gelöst durch ein Verfahren zum Regeln einer hydraulischen Bremsanlage aufweisend eine hydraulische Pumpe zum Fördern von Bremsflüssigkeit von einer Saugseite zu einer Druckseite, zumindest ein elektrisch gesteuertes hydraulisches Ventil, und ein Bremsflüssigkeitsreservoir, welches mit der Saugseite der Pumpe verbunden ist, wobei bei unterschreiten einer Grenztemperatur, das Reservoir mittels des zumindest einen elektrisch gesteuerten hydraulischen Ventils beheizt wird, indem dieses mit einem elektrischen Strom angesteuert wird.
Fig. 1 zeigt eine erfindungsgemäße Bremsanlage,
Fig. 2 zeigt eine alternative Ausführungsform einer erfindungsgemäßen Bremsanlage,
Fig. 3 zeigt schematisch das erfindungsgemäße Verfahren,
Fig. 4 zeigt beispielhafte Größen während der Durchführung des erfindungsgemäßen Verfahrens;

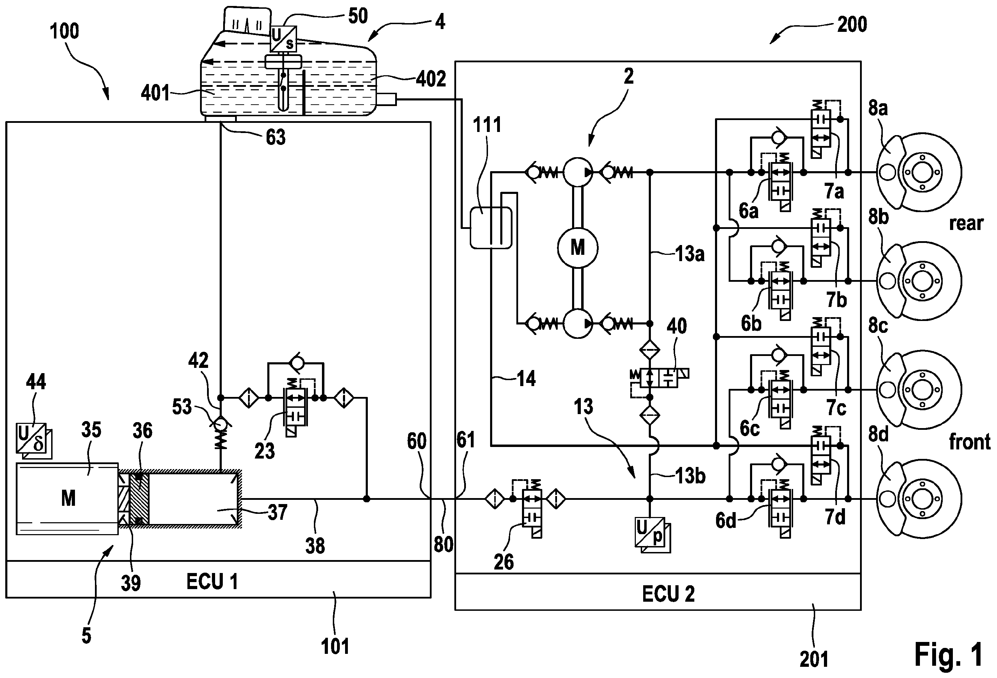

In Fig. 1 ist ein erstes Ausführungsbeispiel einer erfindungsgemäßen Bremsanlage für ein Kraftfahrzeug stark schematisch dargestellt. Beispielsgemäß ist die Bremsanlage zur Betätigung von vier hydraulisch betätigbaren Radbremsen 8a-8d ausgebildet, eine Erweiterung auf mehr Radbremsen sind einfach möglich. Beispielsgemäß sind die Radbremsen 8a, 8b der Hinterachse (rear) und die Radbremsen 8c, 8d der Vorderachse (front) des Fahrzeugs zugeordnet.

Die Bremsanlage umfasst eine erste Baueinheit 100, welche beispielsgemäß als ein erstes elektrohydraulisches Bremsensteuergerät mit einem Ventilblock und einer ersten elektronischen Steuervorrichtung 101 (ECU1) ausgeführt ist, und eine zweite Baueinheit 200, welche beispielsgemäß als ein zweites elektrohydraulisches Bremsensteuergerät mit einem Ventilblock und einer zweiten elektronischen Steuervorrichtung 201 (ECU2) ausgeführt ist.

An der ersten Baueinheit 100 ist ein Druckmittelvorratsbehälter 4 mit zwei Kammern angeordnet, wobei der ersten Kammer 401 ein erster Behälteranschluss zugeordnet ist und der zweiten Kammer 402 ein zweiter Behälteranschluss zugeordnet ist.

In der ersten Baueinheit 100 ist eine erste elektrisch betätigbare Druckquelle 5 angeordnet.

In der zweiten Baueinheit 200 ist eine zweite elektrisch betätigbare Druckquelle 2 sowie radindividuelle Bremsdruckmodulationsventile angeordnet, welche als ein elektrisch betätigbares Einlassventil 6a-6d und ein elektrisch betätigbares Auslassventil 7a-7d je Radbremse 8a-8d ausgeführt sind.

Die erste Druckquelle 5 und die zweite Druckquelle 2 sind druckseitig mit einer Bremsversorgungsleitung 13 verbunden an welche die vier Einlassventile 6a-6d angeschlossen sind. So können alle vier Radbremsen 8a-8d mittels der ersten Druckquelle 5 oder mittels der zweiten Druckquelle 2 betätigt werden.

In der Bremsversorgungsleitung 13 ist ein elektrisch betätigbares Kreistrennventil 40 angeordnet, so dass bei geschlossenem Kreistrennventil 40 die Bremsversorgungsleitung 13 in einen ersten Leitungsabschnitt 13a, an welchen die Einlassventile 6a, 6b bzw. die Radbremsen 8a, 8b angeschlossen sind, und einen zweiten Leitungsabschnitt 13b, an welchen die Einlassventile 6c, 6d bzw. die Radbremsen 8c, 8d angeschlossen sind, getrennt wird. Die zweite Druckquelle 2 ist mit dem ersten Leitungsabschnitt 13a hydraulisch verbunden und die erste Druckquelle 5 ist mit dem zweiten Leitungsabschnitt 13b hydraulisch verbunden. Bei geschlossenen Kreistrennventil 40 ist die Bremsanlage somit in zwei hydraulische Bremskreise aufgetrennt oder aufgeteilt. Dabei ist im ersten Bremskreis die Druckquelle 2 (über den ersten Leitungsabschnitt 13a) mit nur noch den Radbremsen 8a und 8b verbunden, und im zweiten Bremskreis die erste Druckquelle 5 (über den zweiten Leitungsabschnitt 13b) mit nur noch den Radbremsen 8c und 8d verbunden. Das Kreistrennventil 40 ist vorteilhafterweise stromlos offen ausgeführt.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und jeweils mit einem hydraulischen Radanschluss der zweiten Baueinheit 200 verbunden sind, an welche die entsprechende Radbremse 8a-8d angeschlossen ist. Den Einlassventilen 6a-6d ist jeweils ein zu der Bremsversorgungsleitung 13 hin öffnendes Rückschlagventil parallelgeschaltet. Die Ausgangsanschlüsse der Auslassventile 7a-7d sind über eine gemeinsame Rücklaufleitung 14 mit einem Reservoir 111 und über dieses mit dem Druckmittelvorratsbehälter 4 bzw. dessen Kammer 402 verbunden. Die Eingangsanschlüsse aller Einlassventile 6a-6d können mittels der Bremsversorgungsleitung 13 (also bei offenem Kreistrennventil 40) mit einem Druck versorgt werden, der von der ersten Druckquelle 5 oder, z.B. bei Ausfall der ersten Druckquelle 5, von der zweiten Druckquelle 2 bereitgestellt wird.

Die erste elektrisch steuerbare Druckquelle 5 des Ventilblocks ist als eine hydraulische Zylinder-Kolben-Anordnung (bzw. ein einkreisiger elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist, insbesondere vor- und zurückgefahren werden kann, um einen Druck in einem Druckraum 37 auf- und abzubauen. Der Kolben 36 begrenzt den Druckraum 37 der Druckquelle 5. Zur Ansteuerung des Elektromotors ist ein die Rotorlage des Elektromotors 35 erfassender, lediglich schematisch angedeuteter Rotorlagensensor 44 vorgesehen.

An den Druckraum 37 der ersten elektrisch steuerbaren Druckquelle 5 ist ein Systemdruckleitungsabschnitt 38 angeschlossen. Mittels Leitungsabschnitt 38 ist Druckquelle 5 bzw. Druckraum 37 mit einem hydraulischen Anschluss 60 der ersten Baueinheit 100 verbunden, welcher über ein hydraulisches Verbindungselement 80 mit einem hydraulischen Anschluss 61 der zweiten Baueinheit 200 verbunden ist. Verbindung 80 stellt die einzige hydraulische Druckverbindung, insbesondere die einzige hydraulische Verbindung, zwischen der ersten und der zweiten Baueinheit dar. Es handelt sich dabei um eine hydraulische Verbindung zur Übertragung eines Bremsdrucks zur Betätigung der Radbremsen 8a-8d. Verbindungselement 80 muss daher druckfest ausgeführt sein.

Druckraum 37 ist, unabhängig vom Betätigungszustand des Kolbens 36, über eine (Nachsaug)Leitung 42 mit einem hydraulischen Anschluss 63 der ersten Baueinheit 100 mit dem Druckmittelvorratsbehälter 4 bzw. dessen Kammer 401 verbunden. In der Leitung 42 ist ein in Richtung des Druckmittelvorratsbehälters 4 schließendes Rückschlagventil 53 angeordnet. Die Zylinder-Kolben-Anordnung 5 weist beispielsgemäß keine Schnüffellöcher auf.

Weiterhin ist Druckraum 37 beispielsgemäß über den Leitungsabschnitt 38 und ein elektrisch betätigbares, vorteilhafterweise stromlos offen ausgeführtes, zweites Trennventil 23 mit Leitung 42 bzw. dem hydraulischen Anschluss 63 verbunden. Dem zweiten Trennventil 23 ist ein in Richtung des Druckraums 37 öffnendes Rückschlagventil parallelgeschaltet.

Neben dem (Nachsaug)Anschluss 63 und dem (Druck)Anschluss 60 umfasst die erste Baueinheit 100 keine weiteren hydraulischen Anschlüsse.

Die zweite elektrisch steuerbare Druckquelle 2 der zweiten Baueinheit 200 ist beispielsgemäß als eine Zwei-Kolben-Pumpe ausgeführt, deren zwei Druckseiten zusammengeschaltet sind. Die Saugseiten sind über das Reservoir 111 mit der Rücklaufleitung 14 und somit dem Druckmittelvorratsbehälter 4 verbunden. Die Druckseiten sind mit dem ersten Leitungsabschnitt 13a der Bremsversorgungsleitung 13 verbunden.

Neben der Druckquelle 2 und den Bremsdruckmodulationsventilen 6a-6d, 7a-7d ist in der zweiten Baueinheit 200 beispielsgemäß ein elektrisch betätigbares, vorteilhafterweise stromlos offenes, Trennventil oder Zuschaltventil 26 angeordnet. Trennventil 26 ist hydraulisch zwischen dem Anschluss 61 und dem zweiten Leitungsabschnitt 13b der Bremsversorgungsleitung 13 angeordnet. Somit ist die erste Druckquelle 5 über das Trennventil 26 mit dem zweiten Leitungsabschnitt 13b bzw. der Bremsversorgungsleitung 13 trennbar verbunden.

Die Bremsanlage umfasst beispielsgemäß im zweiten Bremskreis (Leitungsabschnitt 13b) einen Drucksensor 19, welcher somit der ersten Druckquelle 5 zugeordnet ist. Dies ist vorteilhaft für den Berstschutz bei aktiver Kreistrennung, also wenn das Kreistrennventil 40 geschlossen ist. Drucksensor 19 kann aber auch im ersten Bremskreis angeordnet sein oder es kann ein zweiter Drucksensor vorgesehen sein, so dass jeder der beiden Bremskreise mittels eines Drucksensors direkt überwacht werden kann.

Beispielsgemäß umfasst die Bremsanlage zur Leckageüberwachung eine Pegelmesseinrichtung 50 zur Bestimmung eines Druckmittel-Pegels in dem Druckmittelvorratsbehälter 4.

Beispielsgemäß sind die Komponenten 5, 53, 23 sowie die Leitungsabschnitte 38, 42 in dem ersten Ventilblock angeordnet und die Komponenten 2, 6a-6d, 7a-7d, 26, 19 sowie die Leitungsabschnitte 13a, 13b (und die Leitungsabschnitte zwischen den Einlass- und Auslassventilen einerseits und den Radanschlüssen andererseits) in dem zweiten Ventilblock angeordnet.

Jedem Ventilblock ist eine elektronische Steuervorrichtung 101, 201 zugeordnet (ECU1, ECU2). Jede elektronische Steuervorrichtung 101, 201 umfasst elektrische und/oder elektronische Elemente (z.B. Mikrocontroller, Leistungsteile, Ventiltreiber, sonstigen elektronische Bauteile, etc.) zur Ansteuerung der elektrisch betätigbaren Komponenten des zugehörigen Ventilblocks und ggf. der zugeordneten Sensoren. Ventilblock und elektronische Steuervorrichtung sind vorteilhafterweise in bekannterweise als eine elektrohydraulische Einheit ausgeführt.

Die erste elektronische Steuervorrichtung 101 steuert die erste Druckquelle 5 an. Beispielsgemäß wird die erste Druckquelle 5 über die erste elektronische Steuervorrichtung 101 mit Energie (von einer ersten elektrischen Energiequelle) versorgt.

Die zweite elektronische Steuervorrichtung 201 steuert die zweite Druckquelle 2 an. Beispielsgemäß wird die zweite Druckquelle 2 über die zweite elektronische Steuervorrichtung 201 mit Energie (von einer zweiten elektrischen Energiequelle) versorgt.

Beispielsgemäß lässt sich bzw. wird die erste Druckquelle 5 ausschließlich durch die erste elektronische Steuervorrichtung 101 und die zweite Druckquelle 2 ausschließlich durch die zweite elektronische Steuervorrichtung 201 ansteuern bzw. angesteuert.

Die Bremsanlage weist eine primäre Druckquelle 5 und eine sekundäre Druckquelle 2 auf, die jeweils von einer ECU elektrisch betrieben werden und einen Sauganschluss und einen Druckanschluss haben. In den Druckanschluss der Sekundärdruckquelle 2 kann auch im stromlosen Zustand keine Bremsflüssigkeit einströmen. Bevorzugt ist die primäre Druckquelle 5 ein Linearaktuator mit Nachsaug-Rückschlagventil 53 und die sekundäre Druckquelle 2 eine Kolbenpumpe. Bevorzugt kann die sekundäre Druckquelle 2 einen höheren Druck als die primäre Druckquelle 5 erzeugen.

Die Saugseiten der beiden Druckquellen 2, 5 sind mit einem Druckmittelvorratsbehälter 4 verbunden, bevorzugt jeweils mit einer von zwei getrennten Kammern (402, 401).

Die Druckseite der primären Druckquelle 5 ist über ein elektromagnetisches Ventil 26, auch Druckzuschaltventil genannt, mit einem primären Kreisknoten (zweiter Leitungsabschnitt 13b) verbunden.

Die Druckseite der sekundären Druckquelle 2 ist direkt (ohne Zwischen-schaltung eines Ventils) mit einem sekundären Kreisknoten (ersten Leitungsabschnitt 13a) verbunden. Die beiden Kreisknoten (Leitungsabschnitte 13a, 13b) sind über ein elektromagnetisches Ventil 40, auch Kreisteilungsventil genannt, miteinander verbunden.

Im Normalbetrieb wird der Druck in den Radbremsen von der Primärdruckquelle 5 bei geschlossenem Trennventil 23 aufgebaut. Abgebaut wird der Druck in die Primärdruckquelle 5 oder über das Trennventil 23. Von den Einlass- und Aus-lassventilen wird der Druck bei Bedarf radindividuell moduliert. Gegebenenfalls wird das Trennventil 26 geschlossen, damit die Primärdruckquelle 5 zusätzliches Volumen nachsaugen kann.

Wenn ein besonders hoher Volumenstrom angefordert wird, arbeiten beide Druckquellen 5 und 2 gleichzeitig parallel. In diesem Fall geschieht der Druck-abbau zumindest teilweise über das Trennventil 23, das bevorzugt als Analogventil ausgeführt ist, also seinen Durchfluss steuern kann. Wenn ein besonders hoher Druck angefordert wird, wird das Trennventil 26 geschlossen, und die Sekundär-druckquelle 2 erhöht den Druck über den Druck der Primärdruckquelle 5 hinaus. Außerhalb von Bremsungen ist der atmosphärische Druckausgleich über Trennventil 23 und Trennventil 26 permanent gewährleistet.

Bei einer Leckage in der Bremsanlage wird das Kreistrennventil 40 geschlossen und das System dadurch in zwei unabhängige Bremskreise aufgeteilt.

Bevorzugt wird das Trennventil 23 von der primären ECU 101 angesteuert. Bevorzugt wird das Trennventil 26 von der sekundären ECU 201 angesteuert. Auf diese Ventilzuordnung bezieht sich die folgende Beschreibung des Betriebs im Fehlerfall.

Wenn das Primärsystem elektrisch ausfällt, insbesondere die primäre ECU 101 oder ihre Spannungsversorgung schließt die sekundäre ECU 201 das Trennventil 26, um über die Sekundärdruckquelle 2 Druck aufzubauen. Abgebaut wird Druck über das Trennventil 26 oder über die Auslassventile 7a-7d. Bevorzugt werden die Ein- und Auslassventile von der sekundären ECU 201 angesteuert, so dass der Druck radindividuell moduliert werden kann.

Wenn das Sekundärsystem elektrisch ausfällt, insbesondere die sekundäre ECU 201 oder ihre Spannungsquelle, wird der Druck wie im Normalbetrieb über die primäre Druckquelle 5 und gegebenenfalls das Trennventil 23 auf- und abgebaut. Auf eine radindividuelle Druckregelung muss verzichtet werden, aber eine gemeinsame Modulation der Raddrücke bleibt möglich, um zu verhindern, dass das Fahrzeug durch blockierende Räder destabilisiert wird.

Im Falle eines Ausfalls von ECU 1 und damit des Linearaktuators 5 soll mittels der Kolbenpumpe 2 in ECU 2 auch in Tieftemperaturbereichen von bis zu -40 °C innerhalb von 500 ms so viel Volumen verschoben werden können, dass eine Verzögerung von 2,44 m/s² erreicht werden kann. Bei typischen Bremsenkennlinien muss dazu ein Volumenstrom von etwa 5 cm³/s gestellt werden.

Das Problem hierbei besteht in der exponentiell ansteigenden Viskosität der Bremsflüssigkeit. Diese erhöhte Viskosität beeinträchtigt den Volumenstrom zur Saugseite der Pumpe in den Bauteilen:
- Leitung zwischen Reservoir und Hydraulik der ECU2
- Den gebohrten Leitungen in der Hydraulik der ECU2
- An den Saugventilen der Pumpe der ECU2

Es hat sich gezeigt, dass sich der größte negative Einfluss an den Saugventilen der Pumpe ausbildet. Es muss daher gelingen, der Pumpe hinreichend viel vorgeheiztes Volumen Bremsflüssigkeit an der Saugseite anzubieten. Die bevorzugte Lösung besteht aus einer Kombination von verschiedenen Merkmalen. Dies sind einerseits optimierte vergrößerte Bohrungen auf der Saugseite der Pumpe innerhalb der Hydraulik von ECU2 und ein zusätzliches Reservoir auf der Saugseite der Pumpe. Dazu kommt das Heizen der Hydraulik der ECU2 auf mindestens -25 °C.

Das Reservoir hat typischerweise das Volumen das zum Erreichen einer Verzögerung von mindestens 2,44 m/s³ benötigt wird. Bei -25°C kann die Pumpe den benötigten Volumenstrom einstellen.

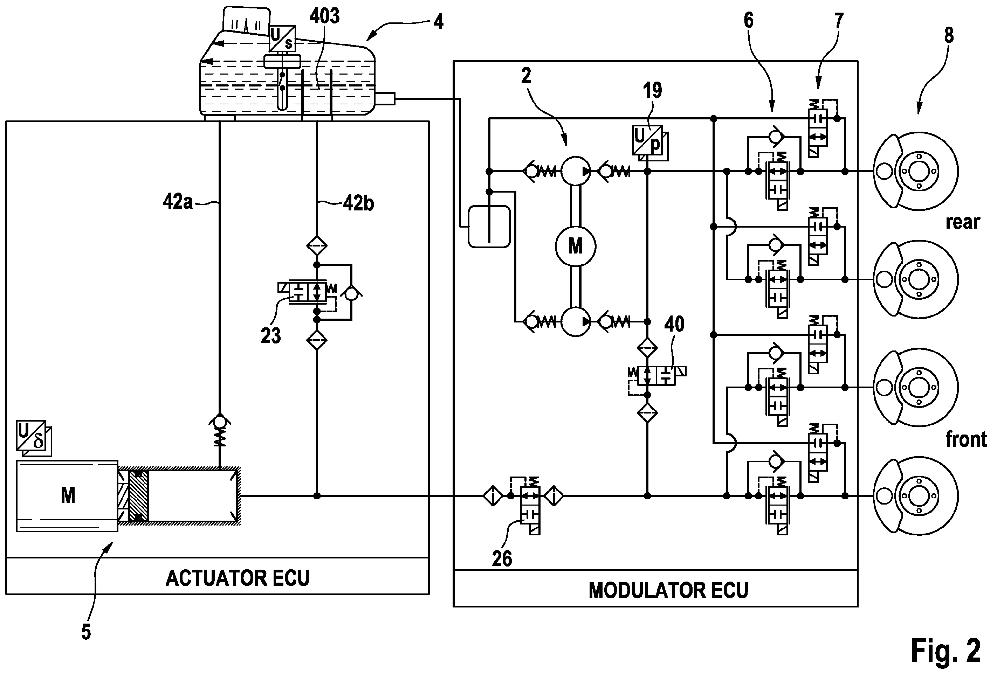

Fig. 2 zeigt eine alternative Ausführungsform der Bremsanlage der Fig. 1. Diese entspricht bis auf die nachfolgend beschriebenen Änderungen der Bremsanlage der Fig. 1. Zum einen ist das Trennventil 23 mit einer eigenen Leitung 42b mit dem Bremsflüssigkeitsbehälter 4 verbunden, welche getrennt von der Nachsaugleitung 42a des Linearaktuators 5 ausgebildet ist. Der Bremsflüssigkeitsbehälter weist hierfür eine eigene Teilkammer 403 auf. Darüber hinaus ist der Drucksensor 19 oberhalb des Kreistrennventils 40 und somit auf der Seite der Kolbenpumpe 2 angeordnet.

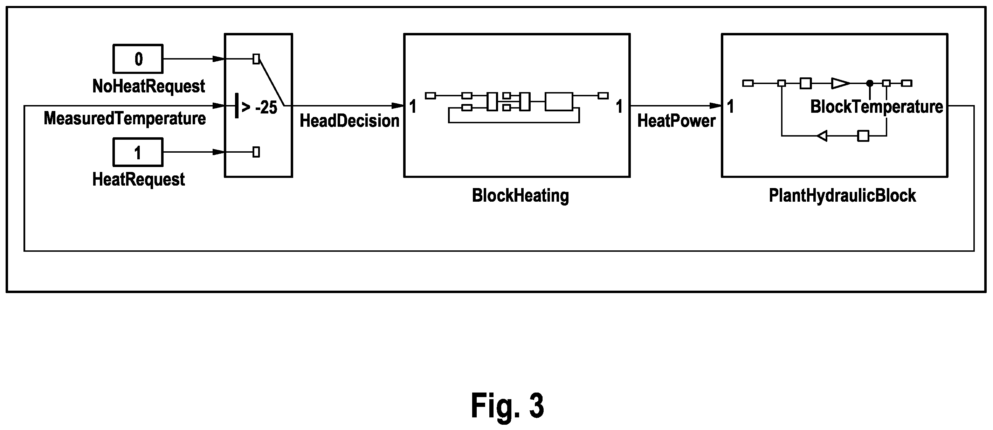

Fig. 3 zeigt die in der Steuereinrichtung 201 umgesetzte Regelung. Ist die gemessene Temperatur kleiner als -25°C so wird geheizt. Dies ist schematisch in dem Feld "Blockheating" dargestellt. Diese Heizung hat einen Einfluss auf die Temperaturen in der Gesamtanlage welche in dem Feld "PlantHydraulicBlock" dargestellt ist. Die sich einstellende Temperatur wird als Regelgröße zurückgeführt.

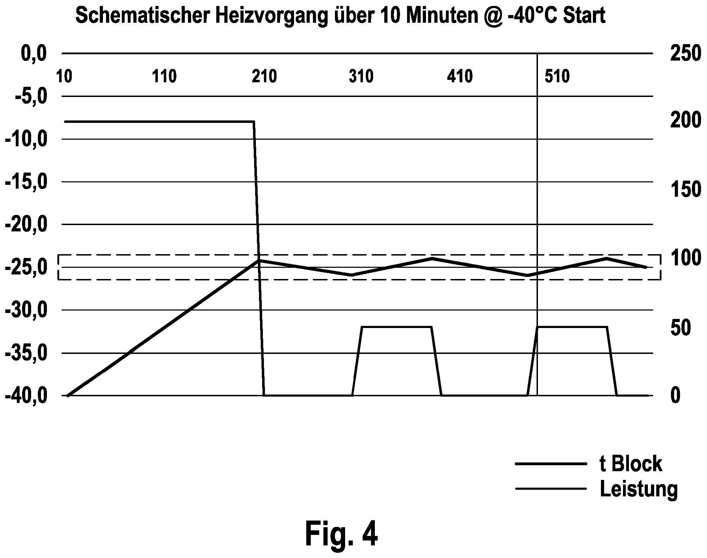

Fig. 4 zeigt nun ein Ausführungsbeispiel, welches bei einer Temperatur des Gehäuseblocks der Bremsanlage von -40°C beginnt. Da die Temperatur unterhalb des Grenzwerts von -25°C liegt wird das Beheizen aktiviert. Es werden alle Spulen mit einem maximalen Strom bestromt, das heißt, bis diese eine mittlere Wicklungstemperatur von 120°C aufweisen, welche mittels einer Widerstandsmessung überprüft wird. Dies entspricht einer Heizleistung von 200W. Dadurch erwärmt sich das Reservoir mit etwa 5K/min. Nach Erreichen des oberen Sollwerts wird die Heizung deaktiviert, bis wiederum ein unterer Grenzwert unterschritten ist. Die Heizung wird dann wieder vermindert mit etwa 50W Leistung aktiviert. Somit wird die Temperatur innerhalb der gezeigten Grenzen gehalten.

Anstelle der Temperaturbetrachtung kann auch direkt die Viskosität betrachtet werden, womit direkt die relevante Zielgröße gemessen wird. Fehler des ungenauen Temperatursensors spielen somit keine Rolle, wodurch die Heizung tatsächlich nur dann aktiviert wird, wenn dies unbedingt nötig ist. Zur Messung der Viskosität wird der Linearaktuator angesteuert einen vorgegebenen Volumenstrom durch ein Auslassventil eines Hinterrads zu fördern. Mittels eines Drucksensors wird die sich einstellende Druckdifferenz gemessen und aus diesen Größen und der Blendengleichung des Auslassventils die Viskosität bestimmt. Aus dem typischen Zusammenhang, dass pro 6 Kelvin Temperaturerhöhung eine Halbierung der Viskosität erfolgt (unabhängig von Typ und Wassergehalt) wird aus dem Verhältnis aus gemessener und gewünschter Viskosität das aufzuschaltende Temperaturdelta bestimmt. z.B. aus Vₘₑₛₛ /Vₛₒₗₗ =8 =2³ folgt ΔT = 3 * 6K = 18 Kelvin.

Aus diesem Wert wird eine entsprechende Heizleistung bestimmt und bereitgestellt: *P = α* * Δϑ mit *α* als thermischer Leitwert, der durch Konstruktion und Experimente bestimmt wird und in der Steuereinheit hinterlegt ist.

Die Heizleistung ergibt sich als Summe der einzelnen Leistungen für alle beteiligten Ventile. Während des Heizens kann die Temperatur überwacht werden, wann das aus der Viskosität berechneten Temperaturdelta erreicht wird. Da nur Temperaturänderungen betrachtet werden, fallen die größeren statischen Fehler( Offset) des Temperatursensors heraus, wodurch die Genauigkeit verbessert ist. Gegebenenfalls kann die Heizleistung P angepasst werden, wenn sich z. B. die externe Temperatur ändert.

Danach kann ggf. die Viskositätsmessung wiederholt werden, um zu überprüfen, ob das Heizen den gewünschten Erfolg hatte.

Durch die Heizung des Reservoirs direkt an der Saugseite der hydraulischen Pumpe kann auch bei Teilausfall des Linearaktuators eine akzeptable Druckdynamik und damit die Verfügbarkeit der Rückfallebene bei Tieftemperatur sichergestellt werden. Das Verfahren ist ohne zusätzliche Hardware umsetzbar und somit sehr kostengünstig.

## Patentansprüche

1. Hydraulische Bremsanlage aufweisend eine hydraulische Pumpe (2) zum Fördern von Bremsflüssigkeit von einer Saugseite zu einer Druckseite, zumindest ein elektrisch gesteuertes hydraulisches Ventil (6, 7, 40, 26), und ein Bremsflüssigkeitsreservoir (111), welches mit der Saugseite der Pumpe (2) verbunden ist, sowie zumindest ein Steuergerät (101, 201) zur Regelung der hydraulischen Pumpe (2) und des zumindest einen hydraulischen Ventils (6, 7, 40, 26), wobei das Steuergerät (101, 201) dazu eingerichtet ist, bei unterschreiten einer Grenztemperatur und/oder überschreiten einer Grenzviskosität, das Bremsflüssigkeitsreservoir (111) mittels des zumindest einen elektrisch gesteuerten hydraulischen Ventils (6, 7, 40, 26) zu beheizen, indem dieses mit einem elektrischen Strom angesteuert wird, **dadurch gekennzeichnet, dass** die hydraulische Pumpe (2) als Kolbenpumpe ausgebildet ist und weiter ein Linearaktuator (5) vorgesehen ist, wobei das Steuergerät (101, 201) dazu eingerichtet ist, im fehlerfreien Fall den Linearaktuator (5) zum Druckaufbau anzusteuern und bei einem Fehler in dem Linearaktuator (5) die Kolbenpumpe (2) zum Druckaufbau anzusteuern.

2. Hydraulische Bremsanlage nach Anspruch 1, **dadurch gekennzeichnet, dass** das Steuergerät mehrteilig ausgeführt ist, wobei eine erste Steuereinheit (101) den Linearaktuator ansteuert und eine zweite Steuereinheit (201) die Kolbenpumpe ansteuert.

3. Hydraulische Bremsanlage nach einem der vorhergehenden Ansprüche, **dadurch gekennzeichnet, dass** das Bremsflüssigkeitsreservoir (111) gemeinsam mit dem zumindest einen elektrisch gesteuerten hydraulischen Ventil (6, 7, 40, 26) in einem Gehäuseblock (200) verbaut ist.

4. Hydraulische Bremsanlage nach einem der vorhergehenden Ansprüche, **dadurch gekennzeichnet, dass** das Bremsflüssigkeitsreservoir (111) als Leitungsverbindung zwischen zwei hydraulischen Einheiten innerhalb des Gehäuseblocks (200) ausgebildet ist.

5. Hydraulische Bremsanlage nach einem der Ansprüche 3 oder 4, **dadurch gekennzeichnet, dass** in dem Gehäuseblock (200) mehrere elektrisch gesteuerte hydraulische Ventile (6, 7, 40, 26) verbaut sind, wobei zum Beheizen alle Ventile (6, 7, 40, 26) bestromt werden und/oder das oder die Ventile (6, 7, 40, 26), mit dem geringsten Abstand zum Bremsflüssigkeitsreservoir (111) bestromt werden.

6. Hydraulische Bremsanlage nach einem der vorhergehenden Ansprüche, **dadurch gekennzeichnet, dass** das Volumen des Bremsflüssigkeitsreservoir (111) derart mit einer Druck-Volumen-Kennlinie der Bremsen abgestimmt ist, dass das Volumen rechnerisch eine Verzögerung von 2,44m/s^2 ermöglicht.

7. Hydraulische Bremsanlage nach einem der vorhergehenden Ansprüche, **dadurch gekennzeichnet, dass** die Grenztemperatur zwischen -20 und -30°C liegt.

8. Hydraulische Bremsanlage nach einem der vorhergehenden Ansprüche, **dadurch gekennzeichnet, dass** das Steuergerät (101, 201) dazu eingerichtet ist, die Viskosität zu messen indem ein vorgegebener Volumenstrom durch ein Auslassventil (7) gefördert wird und die sich einstellende Druckdifferenz gemessen wird.

9. Hydraulische Bremsanlage nach einem der vorhergehenden Ansprüche, **dadurch gekennzeichnet, dass** das Steuergerät (101, 201) dazu eingerichtet ist, die Ventile (6, 7, 40, 26) zu Beginn des Beheizens mit einem maximalen Strom für eine vorgegebene Zeitspanne oder bis zu einer vorbestimmten Temperatur zu bestromen und anschließend mit einem geringeren Haltestrom zu bestromen.

10. Hydraulische Bremsanlage nach einem der vorhergehenden Ansprüche, **dadurch gekennzeichnet, dass** das Steuergerät (101, 201) dazu eingerichtet ist, die Ventile (6, 7, 40, 26) zum Beheizen mit einem Strom basierend auf der Abweichung der Temperatur von der Grenztemperatur und/oder der Viskosität von der Grenzviskosität zu bestromen

11. Hydraulische Bremsanlage nach einem der vorhergehenden Ansprüche, **dadurch gekennzeichnet, dass** die Temperatur der Spulen der Ventile (6, 7, 40, 26) während des Beheizens bestimmt wird.

12. Hydraulische Bremsanlage nach einem der vorhergehenden Ansprüche, **dadurch gekennzeichnet, dass** die Beheizung geregelt oder gesteuert erfolgt.

13. Verfahren zum Regeln einer hydraulischen Bremsanlage nach Anspruch 1 aufweisend eine hydraulische Pumpe (2) zum Fördern von Bremsflüssigkeit von einer Saugseite zu einer Druckseite, zumindest ein elektrisch gesteuertes hydraulisches Ventil (6, 7, 40, 26), und ein Bremsflüssigkeitsreservoir (111), welches mit der Saugseite der Pumpe (2) verbunden ist, **dadurch gekennzeichnet, dass** bei unterschreiten einer Grenztemperatur und/oder überschreiten einer Grenzviskosität, das Reservoir (111) mittels des zumindest einen elektrisch gesteuerten hydraulischen Ventils (6, 7, 40, 26) beheizt wird, indem dieses mit einem elektrischen Strom angesteuert wird.

## Claims

1. Hydraulic brake system comprising a hydraulic pump (2) for conveying brake fluid from a suction side to a pressure side, at least one electrically controlled hydraulic valve (6, 7, 40, 26), and a brake fluid reservoir (111), which is connected to the suction side of the pump (2), and at least one control unit (101, 201) for regulating the hydraulic pump (2) and the at least one hydraulic valve (6, 7, 40, 26), wherein the control unit (101, 201) is designed to heat the brake fluid reservoir (111) by means of the at least one electrically controlled hydraulic valve (6, 7, 40, 26) when a limit temperature is undershot and/or a limit viscosity is exceeded, by the hydraulic valve being actuated with an electric current, **characterized in that** the hydraulic pump (2) is designed as a piston pump and, furthermore, a linear actuator (5) is provided, wherein the control unit (101, 201) is configured to actuate the linear actuator (5) for pressure build-up in the fault-free state and, in the event of a fault in the linear actuator (5), to actuate the piston pump (2) for pressure build-up.

2. Hydraulic brake system according to Claim 1, **characterized in that** the control unit is designed in several parts, wherein a first control unit (101) actuates the linear actuator and a second control unit (201) actuates the piston pump.

3. Hydraulic brake system according to either of the preceding claims, **characterized in that** the brake fluid reservoir (111) is installed, together with the at least one electrically controlled hydraulic valve (6, 7, 40, 26), in a housing block (200).

4. Hydraulic brake system according to one of the preceding claims, **characterized in that** the brake fluid reservoir (111) is formed as a line connection between two hydraulic units within the housing block (200).

5. Hydraulic brake system according to either of Claims 3 and 4, **characterized in that** that a plurality of electrically controlled hydraulic valves (6, 7, 40, 26) are installed in the housing block (200), wherein all valves (6, 7, 40, 26) are energized for heating purposes and/or the valve or valves (6, 7, 40, 26) at the smallest distance from the brake fluid reservoir (111) is/are energized.

6. Hydraulic brake system according to one of the preceding claims, **characterized in that** the volume of the brake fluid reservoir (111) is matched to a pressure-volume characteristic curve of the brakes in such a way that the volume mathematically allows a deceleration of 2.44 m/s^2.

7. Hydraulic brake system according to one of the preceding claims, **characterized in that** the limit temperature is between -20 and -30°C.

8. Hydraulic brake system according to one of the preceding claims, **characterized in that** the control unit (101, 201) is configured to measure the viscosity by a predetermined volumetric flow being conveyed through an outlet valve (7) and the pressure difference which sets in being measured.

9. Hydraulic brake system according to one of the preceding claims, **characterized in that** the control unit (101, 201) is configured to energize the valves (6, 7, 40, 26) at the beginning of heating with a maximum current for a predetermined period of time or up to a predetermined temperature and then to energize them with a lower holding current.

10. Hydraulic brake system according to one of the preceding claims, **characterized in that** the control unit (101, 201) is configured to energize the valves (6, 7, 40, 26) for heating purposes with a current based on the deviation of the temperature from the limit temperature and/or the viscosity from the limit viscosity.

11. Hydraulic brake system according to one of the preceding claims, **characterized in that** the temperature of the coils of the valves (6, 7, 40, 26) is determined during heating.

12. Hydraulic brake system according to one of the preceding claims, **characterized in that** the heating is regulated or controlled.

13. Method for controlling a hydraulic brake system according to Claim 1 comprising a hydraulic pump (2) for conveying brake fluid from a suction side to a pressure side, at least one electrically controlled hydraulic valve (6, 7, 40, 26), and a brake fluid reservoir (111) which is connected to the suction side of the pump (2), **characterized in that**, when a limit temperature is undershot and/or a limit viscosity is exceeded, the reservoir (111) is heated by means of the at least one electrically controlled hydraulic valve (6, 7, 40, 26) by the latter being actuated with an electric current.

## Revendications

1. Système de freinage hydraulique comprenant une pompe hydraulique (2) destinée à transporter un liquide de frein d'un côté aspiration vers un côté pression, au moins une vanne hydraulique à commande électrique (6, 7, 40, 26) et un réservoir de liquide de frein (111), lequel est relié au côté aspiration de la pompe (2), ainsi qu'au moins un contrôleur (101, 201) destiné à réguler la pompe hydraulique (2) et l'au moins une vanne hydraulique (6, 7, 40, 26), le contrôleur (101, 201) étant conçu pour, en cas de franchissement vers le bas d'une température limite et/ou de dépassement d'une viscosité limite, chauffer le réservoir de liquide de frein (111) au moyen de l'au moins une vanne hydraulique à commande électrique (6, 7, 40, 26) en commandant celle-ci avec un courant électrique, **caractérisé en ce que** la pompe hydraulique (2) est réalisée sous la forme d'une pompe à piston et un actionneur linéaire (5) est en outre prévu, le contrôleur (101, 201) étant conçu pour, en l'absence de défaut, commander l'actionneur linéaire (5) pour la mise en pression et, en cas de défaut dans l'actionneur linéaire (5), commander la pompe à piston (2) pour la mise en pression.

2. Système de freinage hydraulique selon la revendication 1, **caractérisé en ce que** le contrôleur est réalisé en plusieurs parties, une première unité de commande (101) commandant l'actionneur linéaire et une deuxième unité de commande (201) commandant la pompe à piston.

3. Système de freinage hydraulique selon l'une des revendications précédentes, **caractérisé en ce que** le réservoir de liquide de frein (111) est monté conjointement avec au moins une vanne hydraulique à commande électrique (6, 7, 40, 26) dans un bloc de boîtier (200).

4. Système de freinage hydraulique selon l'une des revendications précédentes, **caractérisé en ce que** le réservoir de liquide de frein (111) est réalisé sous la forme d'une connexion par conduite entre deux unités hydrauliques à l'intérieur du bloc de boîtier (200).

5. Système de freinage hydraulique selon l'une des revendications 3 ou 4, **caractérisé en ce que** plusieurs vannes hydrauliques à commande électrique (6, 7, 40, 26) sont montées dans le bloc de boîtier (200), pour le chauffage, toutes les vannes (6, 7, 40, 26) étant alimentées électriquement et/ou la ou les vannes (6, 7, 40, 26) les plus proches du réservoir de liquide de frein (111) étant alimentées électriquement.

6. Système de freinage hydraulique selon l'une des revendications précédentes, **caractérisé en ce que** le volume du réservoir de liquide de frein (111) est adapté à une courbe caractéristique pression-volume des freins de telle sorte que le volume permet mathématiquement une décélération de 2,44 m/s^2.

7. Système de freinage hydraulique selon l'une des revendications précédentes, **caractérisé en ce que** la température limite est comprise entre -20 et -30 °C.

8. Système de freinage hydraulique selon l'une des revendications précédentes, **caractérisé en ce que** le contrôleur (101, 201) est conçu pour mesurer la viscosité en faisant passer un débit volumique prédéfini à travers une vanne de sortie (7) et en mesurant la différence de pression qui s'établit.

9. Système de freinage hydraulique selon l'une des revendications précédentes, **caractérisé en ce que** le contrôleur (101, 201) est conçu pour alimenter électriquement les vannes (6, 7, 40, 26) au début du chauffage avec un courant maximal pendant un laps de temps prédéfini ou jusqu'à une température prédéterminée, et ensuite avec un courant de maintien plus faible.

10. Système de freinage hydraulique selon l'une des revendications précédentes, **caractérisé en ce que** le contrôleur (101, 201) est conçu pour alimenter électriquement les vannes (6, 7, 40, 26) en vue de les chauffer avec un courant en fonction de l'écart entre la température et la température limite et/ou entre la viscosité et la viscosité limite.

11. Système de freinage hydraulique selon l'une des revendications précédentes, **caractérisé en ce que** la température des bobines des vannes (6, 7, 40, 26) est déterminée pendant le chauffage.

12. Système de freinage hydraulique selon l'une des revendications précédentes, **caractérisé en ce que** le chauffage est régulé ou commandé.

13. Procédé de régulation d'un système de freinage hydraulique selon la revendication 1, comprenant une pompe hydraulique (2) destinée à transporter un liquide de frein d'un côté aspiration vers un côté pression, au moins une vanne hydraulique à commande électrique (6, 7, 40, 26) et un réservoir de liquide de frein (111), lequel est relié au côté aspiration de la pompe (2), **caractérisé en ce que**, en cas de franchissement vers le bas d'une température limite et/ou de dépassement d'une viscosité limite, le réservoir (111) est chauffé au moyen de l'au moins une vanne hydraulique à commande électrique (6, 7, 40, 26) en commandant celle-ci avec un courant électrique.
